(19) Europäisches Patentamt
European Patent Office
Office européen des brevets

(11) Publication number: **0 463 601 A2**

(12) **EUROPEAN PATENT APPLICATION**

(21) Application number: **91110423.0**

(51) Int. Cl.[5]: **G11B 5/702**

(22) Date of filing: **24.06.91**

(30) Priority: **27.06.90 JP 169200/90**

(43) Date of publication of application:
**02.01.92 Bulletin 92/01**

(84) Designated Contracting States:
**DE FR GB**

(71) Applicant: **SONY CORPORATION**
**7-35, Kitashinagawa 6-chome Shinagawa-ku**
**Tokyo(JP)**

(72) Inventor: **Ohnuma, Hiroko, c/o SONY**
**MAGNETIC PRODUCTS, INC.**
**5-6, Kitashinagawa 6-chome**
**Shinagawa-ku, Tokyo(JP)**

(74) Representative: **TER MEER - MÜLLER -**
**STEINMEISTER & PARTNER**
**Mauerkircherstrasse 45**
**W-8000 München 80(DE)**

(54) **Magnetic recording medium.**

(57) A magnetic recording medium which comprises a non-magnetic support and a magnetic recording layer formed on the support is described. The magnetic recording medium is made of a dispersion of a magnetic powder in a resin binder which is comprised of a first resin having at least one polar group at a rate of from 0.01 to 10 mmols/g and a glass transition point, Tg, of from -50 to 40 ° C and a second resin having a polar group in an amount smaller than the first resin and having a glass transition point, Tg', of higher than 40 ° C and not higher than 200 ° C.

EP 0 463 601 A2

This invention relates to magnetic recording mediums such as magnetic tapes, magnetic disks and the like and more particularly, an improvement in a magnetic recording layer wherein different types of binder resins are used.

Description of The Prior Art

In so-called coating-type magnetic recording mediums, the magnetic recording layer is formed by preparing a magnetic paint, which is obtained by dispersing and kneading ferromagnetic powders, binders, dispersants, lubricants and the like in organic solvents, and applying the paint onto a non-magnetic support such as a polyester film.

The binder contained in the magnetic layer should have good dispersability of the magnetic powder to impart good electromagnetic conversion characteristics to the magnetic recording medium and and is able to form the magnetic layer with good wear and heat resistances.

Binders which have been widely used up to now include vinyl chloride resins such as vinyl chloride-vinyl acetate copolymers, vinyl chloride-propionic acid copolymers, vinyl chloride-vinyl acetate-vinyl alcohol copolymers and the like, and polyurethane resins. In order to satisfactory the above requirement, proper selection of the polymer is important. For instance, when resins having a relatively low glass transition temperature, Tg, are used, the binder is so soft that separation of a magnetic powder from the coating film and stickiness of the magnetic layer face will occur, thereby causing dropout defects. On the contrary, when resins having a relatively high glass transition point, Tg, are used, the binder becomes so hard and brittle that the stress on the magnetic powder cannot be mitigated to cause the powder separation from the coating film with a tendency toward dropout defects.

On the other hand, there is a recent trend toward the use of finer magnetic particles in order to meet the requirement for a higher recording density of magnetic recording mediums. For obtaining a magnetic recording medium having good electromagnetic conversion characteristics by the use of such a finely divided magnetic powder, it is essentially required to increase the dispersability of the magnetic powder.

In order to improve the dispersability of the magnetic powder, it is known to introduce polar groups into binders. This aims at improving the dispersability of the magnetic powder by introducing, into the binder, moieties (polar groups) capable of showing affinity for the magnetic powder, thereby causing the binder to have not only the function as the binder, but also the function as a dispersant and a interfacial reinforcing agent. In the case, the characteristics are greatly influenced by how the polar group is introduced. For improving the durability while ensuring good dispersability, it is necessary to optimumly determine the type of resin used as the binder and the type of polar group being introduced in the resin component.

It is accordingly an object of the invention to provide a magnetic recording medium of the coating type which makes use of a resin binder capable of effectively dispersing a magnetic powder whereby good durability is ensured and dropout defects of the medium can be reduced to a minimum.

It is another object of the invention to provide a magnetic recording medium wherein a magnetic recording layer is made of a magnetic powder dispersed in a combination of different types of resins so that one type of resin is preferentially adsorbed on a magnetic powder to reduce stress in the magnetic powder.

The above objects of the invention can be achieved, according to the invention, by a magnetic recording medium which comprises a non-magnetic support and a magnetic recording layer formed on the support, the magnetic recording layer being made of a dispersion of a magnetic powder in a resin binder which is comprised of a first resin having at least one polar group at a rate of from 0.01 to 10 mmols/g and a glass transition point, Tg, of from -50 to 40°C and a second resin having a polar group in an amount smaller than the first resin and having a glass transition point, Tg', of higher than 40°C and not higher than 200°C.

The magnetic powders useful in the present invention may be any known one ordinarily used for this purpose and may be either oxide magnetic powders or metallic magnetic powders. Examples of the oxide magnetic powder include $\gamma$-$Fe_2O_3$, Co-containing $\gamma$-$Fe_2O_3$, Co-deposited $\gamma$-$Fe_2O_3$, $Fe_3O_4$, Co-containing $\gamma$-$Fe_3O_4$, Co-deposited $\gamma$-$Fe_3O_4$, $CrO_2$ and the like. Examples of the metallic magnetic powder include Fe, Co, Ni, Fe-Co, Fe-Ni, Fe-Co-Ni, Co-Ni, Fe-Co-B, Fe-Co-Cr-B, Mn-Bi, Mn-Al, Fe-Co-V and the like. Further, for the purpose of improving various characteristics, metal components such as Al, Si, Ti, Cr, Mn, Cu, Zn and the like may be added. Hexagonal ferrites such as barium ferrite and iron nitride may also be used.

In the practice of the invention, the binder for forming the magnetic layer along with the magnetic powder comprises two types of resins. One type is a soft resin which has a glass transition point, Tg, of -50°C $\leq$ Tg $\leq$ 40°C. The other type is a hard resin having a glass transition point, Tg', of 40° < Tg' $\leq$ 200°C.

In general, the glass transition point, Tg or Tg', is measured, for example, by differential scanning calorimetry (DSC), thermomechanical analysis (TMA), twisted brain analysis (TBA) or the like. In the practice of the invention, the glass transition point is measured according to a vibron method. In the vibron method, a dissipation factor, tan $\delta$, is measured by means of a vibron which is known as a dynamic viscoelasticity measuring instrument, at which the glass transition point, Tg or Tg', is determined as giving a maximum value of tan $\delta$.

Of the resin components used as the binder, the soft resin may be any material which is used in the field of this type of medium provided that the glass transition point, Tg, is in the range of from -50° C to 40° C and is not critical with respect to the type of resin. Typical examples of the resin include urethane resins, polyester resins, polyether resins, acrylic rubbers, vinylidene chloride-vinyl chloride copolymers and the like. For the soft resin, these resins may be used singly or in combination depending on intended physical properties. In the latter case, the manner of combination and the mixing ration are not critical. The number average molecular weight of the soft resin is preferably in the range of approximately 1000 to 100,000. If the molecular weight is smaller than 100, dropping off or separation of the powder from the tape is liable to occur. Over the above range or in a range exceeding 100,000, solubility is solvents becomes poor.

The soft resin should have a polar group at least at part thereof. The amount of the polar group is in the range of from 0.01 to 10 mmols/g. The type of polar group is not critical and may be basic, neutral or acidic in nature. Nevertheless, depending on the properties such as acid dissociation of the hydroxyl groups existing in the surface of the magnetic powder used, the type of polar group should be selected to be absorbed in amounts as much as possible on the surface of the magnetic powder, thereby determining the most suitable resin as the first soft resin. Examples of the polar group include $-SO_3M$ wherein M represents hydrogen, an alkali metal or an alkyl group, $-OSO_3M'$ wherein M' represents hydrogen, an alkali metal or an alkyl group),

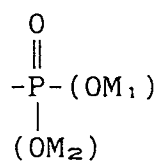

wherein $M_1$ and $M_2$ independently represent hydrogen, an alkali metal or an alkyl group, $-COOM_3$ wherein $M_3$ represents hydrogen, an alkali metal or an alkyl group or $-NR_2$ wherein R represents an alkyl group. It will be noted that the hydroxyl group (-OH group) is not within the scope of the polar group of the soft resin. Plural types of polar groups may be introduced into the soft resin. Alternatively, a plurality of resins having, respectively, different polar groups may be used in combination. Still alternatively, polar group-free resins and resins containing polar groups may be used in combination. In any case, the amount of the polar group in the entire resin should be within the above-defined range.

The mixing ratio of the soft resin component is preferably in the range of 5 wt% - 80 wt%, more preferably, 15 wt% - 60 wt%, based on the total of resins used. If the ratio is less than the above range, the dispersability of magnetic powder is not satisfactory. On the contrary, when the ratio exceeds the above range, stickiness is apt to occur.

The hard resin component may be any resin material ordinarily used in the field of this type of medium provided that the glass transition point, Tg, is higher than 40° C but not higher than 200° C and is not critical with respect to the type. The number average molecular weight of the hard resin component should preferably in the range of 1000 to 100,000 for the same reason as with the soft resin component.

The hard resin should preferably have polar groups in a small amount of $10^{-5}$ - 5 x $10^{-3}$ mmols/g or an appropriate amount of hydroxyl groups. The polar group should preferably have affinity for the magnetic powder which is lower than those polar groups incorporated in the soft resin. The polar group should be properly selected depending on the type of magnetic powder and the type of polar group introduced into the soft resin component. For instance, when $-SO_3Na$ is introduced into the soft resin as the polar group, $-NR_2$ or -COOH is introduced into the hard resin component as the polar group. Alternatively, if -COOH is introduced into the soft resin, $-NR_2$ is introduced into the hard resin.

Thus, in the practice of the invention, the soft resin is preferentially adsorbed on the magnetic powder. By the action of the soft resin, the stress on the magnetic powder is mitigated, thereby preventing the powder from being dropped off and separated as would otherwise cause dropouts. The hard resin acts to impart film strength, so that the dropping off or separation is further prevented to obtain a magnetic

recording medium which is unlikely to cause dropouts and has good durability.

In the magnetic recording medium of the invention, the magnetic layer is formed by dispersing a magnetic powder in a binder, kneading along with an organic solvent selected from ethers, esters, ketones, aromatic hydrocarbons, and chlorinated hydrocarbons depend on the type of binder, and applying the resultant magnetic paint on a non-magnetic support.

The binder and the magnetic powder may be further mixed, if necessary, with various dispersants, lubricants, antistatic agents, rust preventives and the like. The dispersant, lubricant, antistatic agent, rust preventive and non-magnetic support may be any known materials ordinarily used for this purpose without limitation.

The present invention is described by way of examples, which should not be construed as limiting the invention.

The types of soft resin and hard resin, the types and amounts of polar groups of the respective resins, and glass transition points, Tg an Tg', of the respective types of resins are as indicated in Tables 1 and 2.

Table 1

| Soft Resin | Type Of Resin | Polar Group | Amount (mmols/g) | Tg (°C) |
|---|---|---|---|---|
| resin component A | Polyurethane | $-SO_3Na$ | 0.1 | 35 |
| resin component B | polyurethane | $-SO_3Na$ | 0.1 | 30 |
| resin component C | polyether | $-SO_3Na$ | 0.1 | 30 |
| resin component D | polyurethane | $-SO_3Na$ | 0.1 | 20 |
| resin component E | polyester | $-SO_3Na$ | 0.1 | 20 |
| resin component F | polyurethane | $-SO_3Na$ | 0.1 | 0 |
| resin component G | polyurethane | $-SO_3Na$ | 0.1 | -10 |
| resin component H | polyurethane | -COOH | 0.05 | 20 |
| resin component I | polycar-bonate | -COOH | 0.05 | 20 |
| resin component J | polyurethane | -COOH | 0.05 | -10 |
| resin component K | polyurethane | $-SO_3Na$<br>-COOH | 0.009<br>0.05 | 20 |
| resin component L | polyurethane | - | - | -10 |
| resin component M | polyurethane | - | - | 35 |

Table 2

| Hard Resin | Type Of Resin | Polar Group | Amount (mmols/g) | Tg (°C) |
|---|---|---|---|---|
| resin component N | polyvinyl chloride | (-OH) | 1.0 | 70 |
| resin component O | nitro cellulose | (-OH) | 4.0 | 150 |
| resin component P | polyurethane | $-NR_2$ | 0.001 | 80 |
| resin component Q | polyurethane | $-SO_3Na$ | 0.1 | 50 |
| resin component R | polyvinyl chloride | (-OH)<br>$-NR_2$ | 1.0<br>0.001 | 70 |
| resin component S | polyvinyl chloride | (-OH)<br>$-SO_3Na$ | 1.0<br>0.1 | 70 |

Example 1

The resin component A was used as a soft resin and the resin component N was used as a hard resin, which was formulated as shown below to obtain a magnetic paint. The magnetic powder used was Co-containing $\gamma$-$Fe_2O_3$ magnetic powder. The mixing ratio of the binder was such that resin component A: resin component N = 30 wt% : 70 wt%, as indicated in Table 3.

| Composition of the magnetic paint | |
|---|---|
| Magnetic powder | 100 parts by weight |
| Binder | 20 parts by weight |
| Carbon | 2 parts by weight |
| $Cr_2O_3$ | 2 parts by weight |
| Stearic acid | 1 part by weight |
| Butyl stearate | 1 part by weight |
| Methyl ethyl ketone | 100 parts by weight |
| Toluene | 60 parts by weight |
| Cyclohexanone | 60 parts by weight |

The above materials were placed in a container and mixed and dispersed in a ball mill for 24 hours, after which 5 parts by weight of a curing agent (commercial name: Coronate L), followed by kneading for further 20 minutes to obtain a magnetic paint. The magnetic paint was applied onto a non-magnetic support and subjected to orientation in a magnetic field, followed by drying and rolling up. Subsequently, the thus treated support was calendered and thermally treated at about 60 °C for 24 hours, followed by cutting to a predetermined width to obtain magnetic tapes.

Examples 2 to 11

The general procedure of Example 1 was repeated except that the binder in the composition of the magnetic paint of Example 1 was replaced by combinations indicated in Table 3, thereby obtaining magnetic tapes. In Examples 5, 9 and 10, the magnetic powder used was a metallic magnetic powder.

The mixing ratios of the respective binders are as shown in Table 3.

Comparative Example 1

The general procedure of Example 1 was repeated except that the binder in the magnetic paint composition of Example 1 was replaced by resin component F and resin component M, which were, respectively, soft resin, without use of any hard resin component, thereby obtaining magnetic tapes. The mixing ratios of the binders were as indicated in Table 3.

Comparative Example 2

The general procedure of Example 1 was repeated except that the binder in the magnetic paint composition of Example 1 was replaced by resin component N and resin component Q, which were, respectively, hard resins, without use of any soft resin component, thereby obtaining magnetic tapes. The mixing ratios of the binders were as indicated in Table 3.

Comparative Example 3

The general procedure of Example 1 was repeated except that a metallic magnetic powder was used as the magnetic powder and the binder in the magnetic paint composition of Example 1 was replaced by resin component S (a soft resin component) having -OH group and $-SO_3Na$ group in the molecule without use of any soft resin component, thereby obtaining magnetic tapes. The mixing ratios of the binders were as indicated in Table 3.

Comparative Example 4

The general procedure of Example 1 was repeated except that the binder in the magnetic paint composition of Example 1 was replaced by a combination of resin component L (soft resin component) having no polar group and resin component S (hard component) having oH group and $-SO_3Na$ group in the molecule, thereby obtaining magnetic tapes. The mixing ratios of the binders were as indicated in Table 3.

The thus obtained magnetic tapes were subjected to measurements of an attenuation rate of reproduction output, dropping off and stickiness after running over a long term. The results are shown in Table 3.

The attenuation rate of output was determined by subjecting each tape to still reproduction for 60 minutes by the use of a general-purpose recorder to record RF signals and checking an attenuation ratio of reproduction output after the still reproduction to an initial output.

The dropping off was measured by subjecting each tape to 100 repetition running cycles by use of a video tape recorder, thereby determining an amount of dust attached to the drum and the pinch rollers by a low-point method of scoring wherein a larger value indicates a larger amount of dust.

The stickiness was determined by taking up 500 meters of each magnetic tape on a reel, permitting the tape to stand in hot water at 100 °C, and peeling the tape to check a length by meter of the tape to a portion where sticked.

Table 3

| | Soft Resin Component Type | Tg(°C) | Amount(wt%) | Hard Resin Component Type | Tg(°C) | Amount(wt%) |
|---|---|---|---|---|---|---|
| Example 1 | A | 35 | 30 | N | 70 | 70 |
| Example 2 | C | 30 | 30 | N | 70 | 70 |
| Example 3 | E | 20 | 30 | P | 80 | 70 |
| Example 4 | D | 20 | 30 | O | 150 | 70 |
| Example 5 | B | 30 | 50 | P | 80 | 50 |
| Example 6 | H | 20 | 30 | N | 70 | 70 |
| Example 7 | I | 20 | 30 | N | 70 | 70 |
| Example 8 | K | 20 | 30 | N | 70 | 70 |
| Example 9 | J<br>B | -10<br>30 | 20<br>30 | N | 70 | 50 |
| Example 10 | B | 30 | 50 | R | 70 | 50 |
| Example 11 | G | -10 | 40 | N<br>P | 70<br>80 | 40<br>20 |
| Comp.Ex.1 | F<br>M | 0<br>35 | 30<br>70 | - | - | 0 |
| Comp.Ex.2 | - | - | 0 | N<br>Q | 70<br>50 | 70<br>30 |
| Comp.Ex.3 | - | - | 0 | S | 70 | 100 |
| Comp.Ex.4 | L | -10 | 30 | S | 70 | 70 |

Table 3

| Attenuation of Output (dB) | Dusting | stickiness |
|---|---|---|
| -0.5 | 0.25 | nil |
| -0.7 | 0.5 | nil |
| -0.8 | 0.5 | nil |
| -0.8 | 0.5 | nil |
| -0.8 | 0.5 | nil |
| -0.5 | 0.25 | nil |
| -0.5 | 0.5 | nil |
| -0.3 | 0.25 | nil |
| -0.5 | 0.25 | nil |
| -0.3 | 0.25 | nil |
| -0.3 | 0.25 | nil |
| -3.0 | 1.5 | 50 |
| -2.5 | 1.5 | nil |
| -2.0 | 2.0 | nil |
| -2.5 | 1.5 | 300 |

As is apparent from Examples 1 to 11 of the invention, when resins (soft resins) having a glass transition point, Tg, of -50°C to 40°C and resins (hard resins) having a glass transition point, Tg', of higher than 40°C but not higher than 200°C are used in combination, the output attenuation after running over a long term is very small and the powder is suppressed from dropping off. The stickiness can also be prevented.

In contrast, in Comparative Example 4 wherein the soft resin used has no polar group and the hard resin has a $-SO_3Na$ group, the durability is poor and stickiness appears. From the above results, it is considered that the soft resin component should have a polar group having higher affinity in order to cause the soft resin to be preferentially adsorbed on the surface of the magnetic powder. By this, the stress on the magnetic powder is mitigated and the durability is improved.

Further, the results of Examples 8 and 9 reveal that the use of a resin having two types of polar groups such as $-SO_3Na$ group and -COOH group in the molecule as of resin component K is used or of a resin having a $-SO_3Na$ group and a resin having a -COOH group are used in combination is more effective. Likewise, the results of Examples 10 and 11 reveal that as in resin component R, the resin having -OH group and $-NR_2$ group in the molecule or a combination of resins having these groups, respectively, is more effective.

## Claims

1. A magnetic recording medium which comprises a non-magnetic support and a magnetic recording layer formed on the support, the magnetic recording layer being made of a dispersion of a magnetic powder in a resin binder which is comprised of a first resin having at least one polar group at a rate of from 0.01 to 10 mmols/g and a glass transition point, Tg, of from -50 to 40°C and a second resin having a polar group in an amount smaller than the first resin and having a glass transition point, Tg', of higher than 40°C and not higher than 200°C.

2. The magnetic recording medium according to Claim 1, wherein said first resin is present in an amount of from 5 to 80 wt% of said resin binder.

3. The magnetic recording medium according to Claim 1, wherein said first resin has at least one polar group selected from the group consisting of $-SO_3M$ wherein M represents hydrogen, an alkali metal or an alkyl group, $-OSO_3M'$ wherein M' represents hydrogen, an alkali metal or an alkyl group),

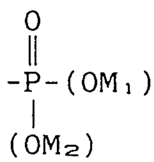

wherein $M_1$ and $M_2$ independently represent hydrogen, an alkali metal or an alkyl group, $-COOM_3$ wherein $M_3$ represents hydrogen, an alkali metal or an alkyl group or $-NR_2$ wherein R represents an alkyl group.

4. The magnetic recording medium according to Claim 3, wherein said first resin has a plurality of the polar groups in the molecule thereof.

5. The magnetic recording medium according to Claim 1, wherein said first resin is a mixture of a resin having one type of polar group and a resin having another type of polar group.

6. The magnetic recording medium according to Claim 1, wherein said first resin is a mixture of a resin having at least one polar group and a resin free of any polar group.

7. The magnetic recording medium according to Claim 1, wherein said second resin has a polar group in an amount of from $10^{-5}$ to $5 \times 10^{-3}$ mmols/g.

8. The magnetic recording medium according to Claim 1, wherein the at least one polar group of said first resin is $-OSO_3Na$ and said second resin has a group of $-NR_2$, where $R_2$ is an alkyl group, or -COOH.

9. The magnetic recording medium according to Claim 1, wherein the at least one polar group of said first resin is -COOH and said second resin has a group of $-NR_2$ where $R_2$ is an alkyl group.